(19) Europäisches Patentamt
European Patent Office
Office européen des brevets

(11) **EP 2 394 206 B1**

## (12) EUROPÄISCHE PATENTSCHRIFT

(45) Veröffentlichungstag und Bekanntmachung des Hinweises auf die Patenterteilung:
**27.11.2013 Patentblatt 2013/48**

(21) Anmeldenummer: **10706564.1**

(22) Anmeldetag: **05.02.2010**

(51) Int Cl.:
*G05D 1/00* (2006.01)  *G06K 9/00* (2006.01)
*G01S 5/00* (2006.01)

(86) Internationale Anmeldenummer:
**PCT/EP2010/051408**

(87) Internationale Veröffentlichungsnummer:
**WO 2010/089365 (12.08.2010 Gazette 2010/32)**

(54) **VERFAHREN UND VORRICHTUNG ZUR LOKALISIERUNG VON OBJEKTEN**

METHOD AND DEVICE FOR LOCATING OBJECTS

PROCÉDÉ ET DISPOSITIF DE LOCALISATION D'OBJETS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.02.2009 DE 102009007684**

(43) Veröffentlichungstag der Anmeldung:
**14.12.2011 Patentblatt 2011/50**

(73) Patentinhaber: **EADS Deutschland GmbH 85521 Ottobrunn (DE)**

(72) Erfinder:
• **KOTZOR, Daniel 82229 Seefeld (DE)**
• **UTSCHICK, Wolfgang 85051 Ingolstadt (DE)**

(74) Vertreter: **Kastel, Stefan Flügel Preissner Kastel Schober Nymphenburger Strasse 20a 80335 München (DE)**

(56) Entgegenhaltungen:
• **HOLLINGER G ET AL: "Tracking a moving target in cluttered environments with ranging radios" 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW, IEEE - PISCATAWAY, NJ, USA, PISCATAWAY, NJ, USA, 19. Mai 2008 (2008-05-19), Seiten 1430-1435, XP031340347 ISBN: 978-1-4244-1646-2**

• **J-L BLANCO ET AL: "A pure probabilistic approach to range-only SLAM" 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW, IEEE - PISCATAWAY, NJ, USA, PISCATAWAY, NJ, USA, 19. Mai 2008 (2008-05-19), Seiten 1436-1441, XP031340348 ISBN: 978-1-4244-1646-2**

• **XUANLONG NGUYEN ET AL: "A Kernel-Based Learning Approach to Ad Hoc Sensor Network Localization" ACM TRANSACTIONS ON SENSOR NETWORKS,, Bd. 1, Nr. 1, 1. August 2005 (2005-08-01), Seiten 134-152, XP007910769 ISSN: 1550-4859**

• **DAN LI ET AL: "Detection, Classification, and Tracking of Targets" IEEE SIGNAL PROCESSING MAGAZINE, IEEE SERVICE CENTER, PISCATAWAY, NJ, US LNKD- DOI: 10.1109/79.985674, Bd. 19, Nr. 2, 1. März 2002 (2002-03-01), Seiten 17-29, XP011093747 ISSN: 1053-5888**

• **EDWIN OLSON ET AL: "Robust Range-Only Beacon Localization" IEEE JOURNAL OF OCEANIC ENGINEERING, IEEE SERVICE CENTER, PISCATAWAY, NJ, US LNKD- DOI: 10.1109/JOE.2006.880386, Bd. 31, Nr. 4, 1. Oktober 2006 (2006-10-01), Seiten 949-958, XP011163868 ISSN: 0364-9059 in der Anmeldung erwähnt**

- TAYLOR C ET AL: "Simultaneous Localization, Calibration and Tracking in an ad Hoc Sensor Network" INFORMATION PROCESSING IN SENSOR NETWORKS, 2006. IPSN 2006. THE FIFTH INTERNATIONAL CONFERENCE ON NASHVILLE, TN, USA 19-21 APRIL 2006, PISCATAWAY, NJ, USA,IEEE LNKD- DOI: 10.1145/1127777.1127785, 19. April 2006 (2006-04-19), Seiten 27-33, XP010932166 ISBN: 978-1-59593-334-8 in der Anmeldung erwähnt

- NEWMAN P ET AL: "Pure range-only sub-sea SLAM" 2003 IEEE INTERNATIONAL CONFERENCE ON ROBOTICS AND AUTOMATION, PISCATAWAY, NJ, USA; [PROCEEDINGS OF THE IEEE INTERNATIONAL CONFERENCE ON ROBOTICS AND AUTOMATION],, Bd. 2, 14. September 2003 (2003-09-14), Seiten 1921-1926, XP010666776 ISBN: 978-0-7803-7736-3 in der Anmeldung erwähnt

**Beschreibung**

Die Erfindung betrifft ein Verfahren und eine Vorrichtung zur Lokalisierung von Objekten in einem unbekannten Terrain. Außerdem betrifft die Erfindung mehrere Verwendungen eines solchen Verfahrens sowie einer solchen Vorrichtung.

"Simultaneous Localization And Mapping" (im folgenden SLAM abgekürzt) bezeichnet eines der grundlegenden Probleme in der autonomen Navigation. Die Aufgabe besteht darin, sich in einer unbekannten Umgebung zu lokalisieren und sich gleichzeitig eine Karte dieser Umgebung aufzubauen. Erst durch die Fortschritte der letzten Jahre ist es überhaupt möglich, in Echtzeit in unbekanntem Terrain autonom zu navigieren.

Der Öffentlichkeit sind entsprechende Technologien insbesondere durch die "Grand Challenges" der US-amerikanischen Defense Advanced Research Projects Agency (DARPA) bekannt geworden. Die DARPA hat in den Jahren 2004, 2005 und 2007 Rennen unbemannter Fahrzeuge durchgeführt, die sich selbst zurechtfinden mussten. Die entsprechenden Events, an denen sich namhafte Institute und Wissenschaftler beteiligt haben, sind durch die Medien wie Funk, Fernsehen und Internet bekannt geworden. Eine besondere Herausforderung stellen dabei die autonome Lokalisierung der entsprechenden Fahrzeuge und der Aufbau einer Karte der Umgebung dar.

Es wird zum Verständnis der Erfindung insbesondere auf die folgenden Literaturstellen aus dem Stand der Technik verwiesen:

[1] B. Schölkopf and A. Smola Learning with Kernels MIT Press, Cambridge, Massachusetts, London 2002

[2] C. Taylor, A. Rahimi, J. Bachrach, H. Shrobe and A. Grue Simultaneous Localization, Calibration, and Tracking in an ad Hoc Sensor Network, Computer Science and Artificial Intelligence Laboratory Massachusetts Institute of Technology, Cambridge, MA 02139

[3] E. Olson, J. Leonard and S. Teller Robust Range-Only Beacon Localization, Proceedings of Autonomous Underwater Vehicles, 2004

[4] P. Newman, and J. Leonard Pure Range-Only Sub-Sea SLAM, Massachusetts Institute of Technology

[5] G. Hollinger, J. Djugash and S. Singh Tracking a moving target in cluttered environments with ranging radios, 2008 IEEE International Conference on Robotics and Automation

[6] J.-L. Blanco, J. Gonzalez and J.-A.Fernandez-Madrigal A pure probabalistic approach to range-only SLAM, 2008 IEEE International Conference on Robotics and Automation

[7] X. Nguyen, M. I. Jordan and B. Sinopoli A Kernel-based learning approach to ad hoc sensor network localisation, University of California, Berkeley

[8] Dan Li et al. Detection, classification, and tracking of targets, IEEE Signal Processing Magazine, März 2002

Problematisch bei den bisher bekannten Lokalisierungsverfahren ist, dass die Positionen von Landmarken oder Positionsmarken, relativ zu denen eine Lokalisierung erfolgt, bekannt sein muss oder zumindest deren Position zueinander bekannt sein müssen. Zum Beispiel wurden bei bisher eingesetzten SLAM-Verfahren der Abstand und die Richtung zu markanten Punkten in der unbekannten Umgebung (z.B. ein Kirchturm, ein Fahnenmast, eine Bergspitze oder ein Baum) gemessen. Aus Information von Abstand und Richtung lässt sich relativ leicht die eigene Position bestimmen. Dies bedarf aber relativ aufwändiger Messtechniken. Zum Beispiel muss man auf Sicht arbeiten. In der Dunkelheit oder in Gebäuden ist eine solche Lokalisierung kaum möglich.

Zur Durchführung der meisten bekannten Lokalisierungsverfahren ist eine aufwändige Vermessung oder genaue Vorbestimmung von Positionsmarken notwendig, was in vielen Fällen nicht möglich oder nur mit relativ aufwändiger Vermessungstechnik zu bewerkstelligen ist.

Es besteht daher der Wunsch, ein Verfahren zur Lokalisierung von Objekten zur Verfügung zu stellen, mit dem sich ein sich bewegendes Objekt allein aufgrund von Abstandsmessungen zu feststehenden, aber an sich an unbekannten Positionen selbst lokalisieren kann.

Falls keine Abstandinformation zwischen den Positionsmarken vorliegt, d.h. keine Kommunikation zwischen den Positionsmarken stattfindet, gibt es nur sehr wenige Verfahren, die das Problem der rein abstandbasierten Lokalisierung lösen.

Zu nennen sind hier die Forschungsarbeiten von:

**C. Taylor, A. Rahimi, J. Bachrach, H. Shrobe and A. Grue [2]:**

In ihrer Arbeit stellen sie ein Verfahren zur Lokalisierung aufgrund von Abstandsmessungen vor. Allerdings gibt es bei diesem bekannten Verfahren wesentliche Nachteile:

1) Es erfordert synchronisierte/gleichzeitige Abstandsmessungen von mindestens vier Positionsmarken gleichzeitig pro Schätzschritt. Der vorgeschlagene Algorithmus kann nur für bestimmte Konstellationen verwendet werden; es ist eine aufwändige Synchronisierung der Abstandsmessungen und eine aufwändige Messtechnik notwendig.

2) Das Ergebnis wird in Form von diskreten Positionen zurückgegeben. Zusätzliche Sensoren, welche zu nicht synchronen Zeitpunkten Zusatzdaten liefern, können ohne Rasterung nicht in das bekannte Verfahren eingebunden werden.

### J. Leonard, S. Teller, E. Olson and P. Newman [3],[4]

Die Autoren beschreiben in ihrer Arbeit ein Verfahren zur Lokalisierung eines U-Bootes mit Abstandsdaten zu Bojen als Positionsmarken. Auch dieses Verfahren weist die oben und 1) und 2) genannten Nachteile auf. Allerdings wird in Ihrer Arbeit das Synchronisationsproblem erwähnt und als Lösung ein einfaches diskretes Bewegungsmodell gefordert, welches dann implizit voraussetzt, dass die Sensordaten zumindest mit konstanter Taktzeit eintreffen. Auch diese Methode eignet sich für bestimmte, hier interessierende Lokalisierungsproblem nicht.

### G. Hollinger, J. Djugash and S. Sing [5]

In dieser Veröffentlichung beschreiben die Autoren ein Verfahren zur Lokalisierung eines sich bewegenden Objekts anhand von Radiosendern, deren Position bekannt sein kann oder nicht. Sind die Positionen der Radiosender unbekannt, so verläuft das Verfahren in zwei Schritten. In einem ersten Schritt wird die Bewegungskurve des sich bewegenden Objekts ermittelt. Anschließend wird die Bewegungskurve dazu verwendet, die Position der feststehenden Radiosender zu ermitteln.

Aufgabe der Erfindung ist es, ein Verfahren und eine Vorrichtung zur Verfügung zu stellen, mittels denen ein sich in einer unbekannten Umgebung bewegendes Objekt mit geringeren Anforderungen an die Messtechnik lokalisiert werden kann.

Diese Aufgabe wird durch ein Verfahren mit den Schritten des Hauptanspruchs sowie eine Vorrichtung mit den Merkmalen des Nebenanspruches gelöst.

Vorteilhafte Ausgestaltungen der Erfindung sind Gegenstand der Unteransprüche.

Die Erfindung schafft ein Verfahren zur Lokalisierung eines sich in einer unbekannten Umgebung bewegenden Objekts mit:

Vorsehen von $k$ Positionsmarken an unbestimmten voneinander beabstandeten Positionen $p_1$, $p_2$..., $p_k$ mit $\{p_1,...,p_k\} \in \Re^3$, wobei $k$ eine natürliche Zahl größer oder gleich 3 ist,

wiederholtes Messen des Abstands zwischen Objekt und Positionsmarke für jede der Positionsmarken unabhängig voneinander zu unkontrollierten Zeitpunkten, so dass zu den Zeitpunkten $\{t_1,...,t_n\} \in \Re$ die Abstandswerte $\{r_1,...,r_n\} \in \Re$ vorliegen, und Ermitteln einer Bewegungskurve $x(t) \in \Re^3$ über

$$x(t) = \sum_{i=1}^{n} \alpha_i k(t,t_i),$$

wobei n die Anzahl der verwendeten Abstandsmessungen und jede Funktion $k(t, t_i)$ eine positiv definite Kernfunktion ist und wobei $\{\alpha_1,...,\alpha_n\} \in \Re^3$ Koeffizientenvektoren sind, die durch Glattheitsbedingungen mittels eines mit den Kernfunktionen gebildeten Regularisierungsterms abgeschätzt werden.

Weiter wird erfindungsgemäß eine Vorrichtung zur Durchführung des Verfahrens und/oder zur Lokalisierung eines sich in einer unbekannten Umgebung bewegenden Objekts vorgeschlagen, mit:

einer Messeinrichtung, die zum wiederholten Messen des Abstands zwischen dem Objekt und wenigstens drei an unbestimmten Positionen fest angeordneten Positionsmarken für jede der Positionsmarken unabhängig voneinander zu einer Reihe von Zeitpunkten ausgebildet ist und zur Ausgabe von zu den Zeitpunkten $\{t_1,...,t_n\} \in \Re$ ermittelten Abstandswerten $\{r_1,...,r_n\} \in \Re$ fähig ist und

einer Auswerteeinrichtung zum Ermitteln einer Bewegungskurve $x(t) \in R^3$ über

$$x(t) = \sum_{i=1}^{n} \alpha_i k(t, t_i),$$

wobei n die Anzahl der verwendeten Abstandsmessungen und jede Funktion $k(t, t_i)$ eine positiv definite Kernfunktion ist und wobei $\{\alpha_1, ..., \alpha_n\} \in \Re^3$ Koeffizientenvektoren sind, und wobei die Auswerteeinrichtung zum Abschätzen der Koeffizientenvektoren durch Glattheitsbedingungen mittels eines mit den Kernfunktionen gebildeten Regularisierungsterms eingerichtet ist.

Die vorliegende Erfindung setzt auf die gegenwärtige Entwicklung im Bereich autonomer Navigation (SLAM) sowie auf aktuelle Erkenntnisse im Bereich maschineller Lernverfahren. Insbesondere lässt sich mit der Erfindung das Problem der Selbstlokalisierung auf Basis von unsynchronisierten und fehlerbehafteten Abstandsdaten zu stillstehenden Objekten unbekannter Position lösen.

Alle aus [2], [3], [4] bekannten Verfahren basieren darauf, eine Menge an diskreten Positionen zu den Zeitpunkten der Messwerterfassung zu schätzen. Dieses Problem ist für unsynchronisierte Abstandsmessungen mathematisch gesehen unterbestimmt und damit nicht lösbar.

Im Unterschied dazu werden im vorgestellten Verfahren Mehrdeutigkeiten durch Glattheitsbedingungen für die Bahnkurve (Regularisierung) beseitigt. Um dies zu bewerkstelligen wird die Lösung in einem Funktionenraum gesucht, genauer gesagt in einem so genannten RKHS ("reproducing kernel hilbert space") [1]. Geschätzt wird statt der erwünschten Positionen zu verschiedenen Zeitpunkten für das zu lokalisierende Objekt ein Satz an Koeffizienten, mit denen sich der Raum aller Bahnkurven effektiv darstellen lässt. Die Basis dieses RKHS stellen dabei so genannte Kernfunktionen dar. Durch Regularisierung und damit Einbringung von "Glattheitsbedingungen" wird dann das an sich unterbestimmte Gleichungssystem eindeutig gelöst.

Erfindungsgemäß werden die Positionen der Positionsmarken sowie die Koeffizienten zur Bestimmung der Bahnkurve x(t) durch Minimierung eines regularisierten Risikofunktionals geschätzt. Das Risikofunktional setzt sich zum Beispiel zusammen aus einer Kostenfunktion, die die Fehlerverteilung berücksichtigt (, z.B. quadratische Fehlerverteilung), und aus einem Regularisierungs- oder Bestrafungsterm, der Abweichungen der als Kernfunktionen gewählten Modellfunktion von dem tatsächlichen Verhalten des dynamischen Systems des sich bewegenden Objekts berücksichtigt. Durch Minimierung eines solchen regularisierten Risikofunktionals lassen sich diejenigen Werte, die zu dem Minimum führen, als Lösung für den Ort der Positionsmarken und für die Koeffizienten zur Bestimmung der Bahnkurve erhalten. Entsprechende mathematische Methoden und Algorithmen werden bereits in der Informatik in dem Bereich des Maschinenenlernens für andere Zwecke, z.B. zur Bildbearbeitung, angewandt und sind daher grundsätzlich bereits bekannt.

Folgende Vorteile lassen sich mit dem erfindungsgemäßen Verfahren, der erfindungsgemäßen Vorrichtung oder deren vorteilhaften Ausgestaltungen erzielen:

1) Der Hauptvorteil des Verfahrens besteht sicherlich darin, dass es erstmals überhaupt möglich ist, ohne Informationsverlust, und damit in hoher Qualität, eine Lösung zum Problem der Selbstlokalisation allein aufgrund unsynchronisierter reiner Abstandsdaten (nur Abstand bekannt, keine Richtung) zu finden.

2) Das Verfahren besitzt sehr wenige Parameter, die optimiert werden müssen.

3) Das Ergebnis für die Bahnkurve wird in einer analytischen Form ausgegeben. Damit kann das Ergebnis zu jedem Zeitpunkt ausgewertet werden, und Synchronisationspunkte für eine Sensordatenfusion mit anderen Daten sind daher nicht notwendig. Darüber hinaus erlaubt diese Darstellungsform auch differenzierte Information, z.B. Beschleunigungsdaten einer IMU (inertial measurement unit), einzubinden.

4) Das Verfahren weist eine vergleichsweise hohe Flexibilität bezüglich der Modellierung unterschiedlicher Lokalisierungsprobleme auf.

Im Folgenden wird die Erfindung anhand der beigefügten Zeichnungen näher erläutert. Dabei zeigen:

Fig. 1    eine schematische Darstellung einer Bewegungskurve eines Objekts in einer unbekannten Umgebung;

Fig. 2    eine schematische Darstellung der Eingabe und Ausgabedaten eines Verfahrens zur Lokalisierung des Objekts und der zur Lokalisierung eingesetzten Positionsmarken;

Fig. 3    eine schematische Darstellung eines sich in einer unbekannten Umgebung bewegenden ersten Objekts mit hoher Dynamik am Beispiel einer sich in einem unbekannten Raum mit vier festen Positionsmarken bewegenden Maus;

Fig. 4    eine schematische Darstellung eines sich im gleichen Raum bewegenden zweiten Objekts mit geringerer Dynamik am Beispiel einer die Maus verfolgenden Katze;

Fig. 5    einen schematischen Graphen, der den zeitlichen Verlauf des realen Abstands der Katze zu der ersten Positionsmarke und zu unterschiedlichen Zeiten gemessene, fehlerbehaftete Abstandswerte zeigt;

Fig. 6    einen schematischen Graphen, der den zeitlichen Verlauf des realen Abstands der Katze zu der zweiten Positionsmarke und zu unterschiedlichen Zeiten gemessene, fehlerbehaftete Abstandswerte zeigt;

Fig. 7    einen schematischen Graphen, der den zeitlichen Verlauf des realen Abstands der Katze zu der dritten Positionsmarke und zu unterschiedlichen Zeiten gemessene, fehlerbehaftete Abstandswerte zeigt;

Fig. 8    einen schematischen Graphen, der den zeitlichen Verlauf des realen Abstands der Katze zu der vierten Positionsmarke und zu unterschiedlichen Zeiten gemessene, fehlerbehaftete Abstandswerte zeigt;

Fig. 9    einen schematischen Graphen, der den zeitlichen Verlauf des realen Abstands der Maus zu der ersten Positionsmarke und zu unterschiedlichen Zeiten gemessene, fehlerbehaftete Abstandswerte zeigt;

Fig. 10   einen schematischen Graphen, der den zeitlichen Verlauf des realen Abstands der Maus zu der zweiten Positionsmarke und zu unterschiedlichen Zeiten gemessene, fehlerbehaftete Abstandswerte zeigt;

Fig. 11   einen schematischen Graphen, der den zeitlichen Verlauf des realen Abstands der Maus zu der dritten Positionsmarke und zu unterschiedlichen Zeiten gemessene, fehlerbehaftete Abstandswerte zeigt;

Fig. 12   einen schematischen Graphen, der den zeitlichen Verlauf des realen Abstands der Maus zu der vierten Positionsmarke und zu unterschiedlichen Zeiten gemessene, fehlerbehaftete Abstandswerte zeigt;

Fig. 13   Graphen von für ein Lokalisierungsverfahren zur Lokalisierung der Katze und zur Lokalisierung der Maus verwendeten Kernfunktionen;

Fig. 14   eine graphische Darstellung zum Vergleich der realen Bahn der Katze und der realen Positionen der Positionsmarken mit einer mittels des Lokalisierungsverfahrens erhaltenen Bahn für die Katze und mit den mittels des Lokalisierungsverfahrens erhaltenen Positionen der Positionsmarken;

Fig. 15   eine graphische Darstellung zum Vergleich der realen Bahn der Maus und der realen Positionen der Positionsmarken mit einer mittels des Lokalisierungsverfahrens erhaltenen Bahn für die Maus und mit den mittels des Lokalisierungsverfahrens erhaltenen Positionen der Positionsmarken;

Fig. 16   eine schematische Blockdarstellung einer auf dem hier vorgestellten Lokalisierungsverfahrens beruhenden möglichen weiterführenden Verfeinerung eines Lokalisierungsverfahrens; und

Fig. 17   eine schematische Darstellung von verschiedenen Phasen der Verfeinerung gemäß Fig. 16.

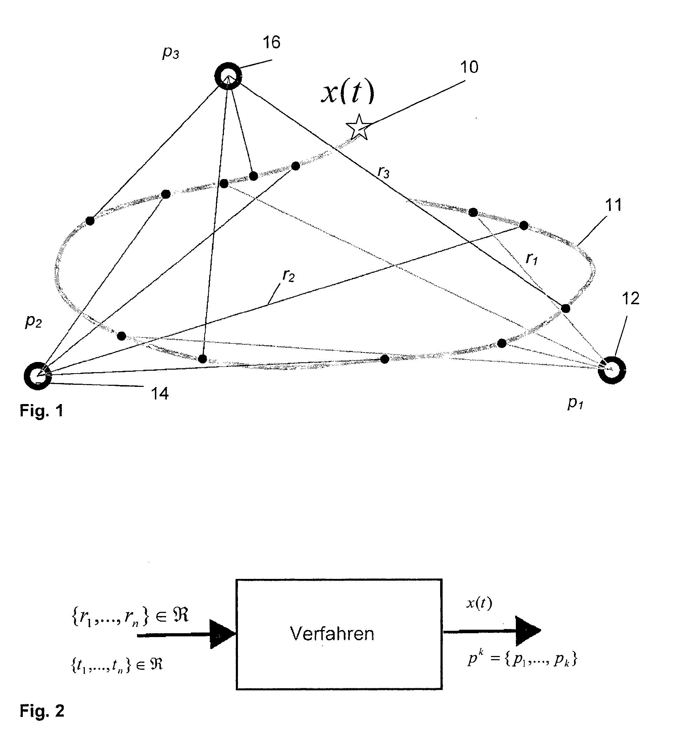

In Fig. 1 ist die Bewegung eines Objekts 10 in einer unbekannten Umgebung anhand einer Bewegungskurve 11 dargestellt. Die Bewegungskurve stellt eine Funktion des dreidimensionalen Ortes dar, das heißt $x(t) \in \Re^3$. Die Darstellung kann zum Beispiel in kartesischen Koordinaten mit den Koordinatenachsen x, y, z erfolgen, also etwa in der Form x(t) = $(x^x(t), x^y(t), x^z(t))$.

Um das Objekt 10 zu lokalisieren, werden wenigstens drei Positionsmarken 12, 14, 16 an unbestimmten Orten $p_1 = \left( p_1^x, p_1^y, p_1^z \right),\ p_2 = \left( p_2^x, p_2^y, p_2^z \right),\ p_3 = \left( p_3^x, p_3^y, p_3^z \right)$ vorgesehen. Mit einer nicht näher dargestellten Messeinrichtung wird zu unbestimmten Zeitpunkten $t_i$ der reine Abstand $r$ des Objekts 10 zu je einer der Positionsmarken 12, 14, 16 gemessen.

Als möglicher Anwendungsfall sei die Lokalisierung von Rettungskräften in einem unbekannten Gebäude (nicht dargestellt) genannt.

Zunächst werden Landmarken um oder im entsprechenden Gebäude an beliebigen unbekannten Positionen angebracht/abgeworfen. Diese Landmarken stellen die Positionsmarken 12, 14, 16 dar. Zum Beispiel bringen die Rettungskräfte an mehreren Stellen in dem Gebäude kleine Sender oder Sende-Empfänger (nicht dargestellt) an. Eine andere Möglichkeit ist, dass entsprechende Sender von Hilfskräften aus der Luft an beliebigen Stellen um das Gebäude herum abgeworfen werden können. Dabei sind bevorzugt mehr als drei Positionsmarken, z.B. wenigstens vier, oder auch zehn oder zwanzig Positionsmarken vorgesehen. Die Anzahl der aktiven Positionsmarken kann sich auch während des Verfahrens ändern.

Die Rettungskräfte, die jeweils mit einem Sender/Empfänger (nicht dargestellt) ausgestattet sind, mit dem Abstände zu den einzelnen Sendern oder Sende-Empfängern an den Positionsmarken 12, 14, 16 gemessen werden können, betreten daraufhin das Gebäude und können nach einer kurzen Initialisierungsphase (evtl. nach 1 min) relativ zu dem durch die Positionsmarken 12, 14, 16 gebildeten Knotennetzwerk lokalisiert werden. Gleichzeitig wird dabei die Topologie des Knotennetzwerks geschätzt.

Dies geschieht in einer Auswerteelektronik (nicht dargestellt), die z:b. in Form eines mobilen Datenverarbeitungsgerät, das von den Rettungskräften mitgeführt wird, vorliegt und mit dem Sender/Empfänger der Rettungskräfte zum Erhalt der Abstandsdaten verbunden ist.

In der Auswerteelektronik wird automatisch ein Verfahren zur Lokalisierung des Objekts 10 durchgeführt, wie es als Block in Fig. 2 dargestellt ist.

Als Eingangsdaten stehen somit für das Verfahren nur unsynchronisierte Abstandsdaten zur Verfügung. Das Ergebnis des Verfahrens ist eine Bahnkurve $x(t)$ für das zu lokalisierende Objekt sowie die Positionsdaten $p^k = \{p_1,..., p_k\}$ der verwendeten Positionsmarken zu denen die Abstandsdaten gemessen wurden.

Für die Relativpositionierung ist damit

- kein Vorwissen über die Bewegung,
- kein Vorwissen über die Positionsmarkenpositionen,
- keine weitere Sensorik
- und auch keine zeitliche Synchronisierung bzw. Kommunikation der Positionsmarken notwendig.

Bei diesem Verfahren werden Mehrdeutigkeiten durch Glattheitsbedingungen für die Bahnkurve $x(t)$, d.h. insbesondere durch Regularisierung beseitigt. Um dies zu bewerkstelligen, wird die Lösung in einem Funktionenraum gesucht, genauer gesagt in einem so genannten RKHS ("reproducing kernel hilbert space"), siehe hierzu genauer auch die Literaturstelle **[1]**, auf die für weitere Einzelheiten ausdrücklich verwiesen wird und durch Bezugnahme inkorporiert wird.

Geschätzt wird statt der erwünschten Positionen zu verschiedenen Zeitpunkten für das zu lokalisierende Objekt ein Satz an Koeffizienten, mit denen sich der Raum aller Bahnkurven effektiv darstellen lässt. Die Basis dieses RKHS stellen dabei so genannte Kernfunktionen dar. Durch Regularisierung und damit Einbringung von "Glattheitsbedingungen" wird dann das an sich unterbestimmte Gleichungssystem eindeutig gelöst. Die wesentlichen Komponenten des Verfahrens sollen im Folgenden genauer beschrieben werden.

Der Ausgangspunkt ist folgender: Es gibt mindestens drei Positionsmarken 12, 14, 16, vorzugsweise mehr Positionsmarken, allgemein $k$ Positionsmarken mit $k \geq 3$, und vorzugsweise mit $k > 3$. Die Positionsmarken können in Form von Sendern oder dergleichen vorliegen, über die über bekannte Methoden der Abstand zu dem zu lokalisierenden Objekt 10 gemessen werden kann. Als Beispiel eines zu lokalisierenden Objektes wäre ein Feuerwehrmann zu nennen, der sich durch das oben erwähnte unbekannte Gebäude bewegt. Um das Gebäude herum sind die wenigstens drei Positionsmarken 12, 14, 16 wie in Fig. 1 gezeigt angeordnet.

Dieses System ist zunächst sehr unbestimmt. Wie gezeigt kann der Feuerwehrmann auf seinem mitgeführten Gerät (z.B. Sende-Empfänger) möglicherweise zum Zeitpunkt $t_1$ nur einen Abstand $r_1$ von der ersten Mess- oder Posi-tonsmarke 12 ($p_1$) erhalten. Zu einem Zeitpunkt $t_2$, wo er sich noch etwas weiter entfernt hat, erhält er einen Abstand $r_2$ von der zweiten Mess- oder Positionsmarke 14 ($p_2$). Zu einem dritten Zeitpunkt $t_3$ erhält er einen Abstand $r_3$ von der dritten Mess- oder Positionsmarke 16 ($p_3$). Der Empfang muss nicht abwechselnd oder regelmäßig sein. Vielleicht werden einige Signale nicht in der ausreichenden Qualität empfangen. So kann der Feuerwehrmann zu einem vierten Zeitpunkt $t_4$ z.B. wieder einen Abstand $r_4$ von der zweiten Mess- oder Positionsmarke 14 ($p_2$) erhalten; und zu einem fünften Zeitpunkt $t_5$ erhält er einen Abstand $r_5$ von der ersten Mess- oder Positionsmarke 12 ($p_1$) usw. Bei allen diesen fünf Zeitpunkten hat sich der Feuerwehrmann aber weiter bewegt. Es gibt demnach pro Messung zum Zeitpunkt $t_i$ drei Unbekannte, nämlich jeweils die Koordinaten der Position $x^x(t_i), x^y(t_i), x^z(t_i)$, dazu jeweils aber nur ein neuer Messwert, nämlich der Abstand $r_i$ zu der jeweiligen Positionsmarke $p_{a_i}$, wobei $a_i$ den Index für die zur Abstandsmessung $r_i$ zugehörige Positionsmarke, zu welcher der Abstand $r_i$ gemessen worden ist, darstellt. Bei der oben erwähnten Messung zum Zeitpunkt $t_4$ wäre $a_i$ demnach 2, es wurde ja der Abstand zur Positionsmarke $p_2$ gemessen.

Bisher war dieses System mathematisch nicht lösbar, weil es drei Unbekannte jedoch nur einen Messwert gibt. Damit ist das System mathematisch unterbestimmt.

Die Lösung dieses Problems liegt in einer Abschätzung. Man geht davon aus, dass sich das Objekt nicht beliebig bewegen kann und das durch das bewegende Objekt 10 dargestellte dynamische System bestimmte Eigenschaften hat. Jedes dynamische System wird ein bestimmtes Verhalten an den Tag legen. Als Beispiel sind hierzu ein Supertanker, der Feuerwehrmann oder eine Fliege, die sich im Raum bewegt, zu nennen.

Der Supertanker bewegt sich mit einer langsamen konstanten Geschwindigkeit und kann diese Bewegungsrichtung innerhalb einer bestimmten Zeit kaum ändern. Insofern ist die Bewegung eines Supertankers sehr leicht vorhersehbar. Die Fliege macht innerhalb von wenigen Sekunden mehrere Richtungsänderungen, sodass das dynamische System einer Fliege sehr unsicher und unbestimmt ist. Ein Feuerwehrmann wird sich zwischen diesen beiden Extremen bewegen.

Der Lösungsansatz liegt hier nun darin, für das jeweilige dynamische System eine passende Funktion zu finden, mit der die jeweilige Position des Objektes entsprechend abgeschätzt werden kann.

Die Lösung kann verbessert werden durch die Wahl der Funktion. Eine ideale Wahl der Funktion wäre die sogenannte Impulsantwort des dynamischen Systems. Solche Impulsantworten sind aus der Elektrotechnik bekannt. Man gibt einen scharfen Impuls auf das System und untersucht dann die Antwort dieses Systems. Übertragen auf mechanische Systeme könnte man eine Billardkugel nennen. Gibt man dieser Billardkugel einen Stoß, dann wird sie sich in einer bestimmten Richtung bewegen. Die Impulsantwort einer Billardkugel wäre demnach eine geradlinige lineare Bewegung, wobei jedoch ein bestimmtes Dämpfungsverhalten vorhanden wäre. Würde man die Impulsantwort des dynamischen Systems kennen, so wäre dies die ideale Lösung. Für viele dynamische Systeme wird man eine solche Impulsantwort aufgrund von Simulationsrechnungen als Funktion erstellen können.

Es geht aber auch mit bestimmten anderen Funktionen. Beispielsweise kann man als geeigneten Ansatz für ein relativ unbestimmtes dynamisches System eine Gaußkurve annehmen.

Die Kurve sollte jedoch an das jeweilige dynamische System angepasst sein. Beim Beispiel der Gaußkurve heißt dies, dass die Gaußkurve beim Supertanker relativ breit sein kann. Beim Beispiel der Fliege sollte die Gaußkurve sehr schmal sein. Hintergrund ist, dass man bei dem Supertanker davon ausgehen kann, dass er sich nach einer Sekunde, oder auch noch nach einer Minute immer noch in der gleichen Richtung bewegen wird. Demnach ist die Wahrscheinlichkeit der Bewegung relativ gut bestimmt, sodass man auch eine breite Gaußkurve nehmen kann. Bei der Fliege ist die Zukunft weitaus unbestimmter, sodass man auch nur geringe Aussagen auf die Zukunft treffen kann. Daher ist auf der Zeitachse die Gaußkurve bedeutend schmäler zu wählen.

Zur einfachen Darstellung nehmen wir folgende Annahme an. Wir haben drei Messungen zu den Zeitpunkten $t_1$, $t_2$, $t_3$. Die Position $x^x(t)$ des Objekts 10 auf der x-Achse lässt sich darstellen durch die Gleichung (1):

$$(1) \qquad x^x(t) = \alpha_1^x k_1(t) + \alpha_2^x k_2(t) + \alpha_3^x k_3(t)$$

$\alpha_1^x$, $\alpha_2^x$, $\alpha_3^x$ stellen unbekannte Koeffizienten dar. $k_1(t)$, $k_2(t)$, $k_3(t)$ stellen die ausgewählten angenommenen Funktionen dar. Die Positionen $x^x$ zum Zeitpunkt t ergibt sich dann durch diese Gleichung. Zu bestimmen sind die Koeffizienten $\alpha_1^x$, $\alpha_2^x$, $\alpha_3^x$. Als Ansatz werden hier als Funktionen z.B. die Gaußfunktionen gewählt. Anstelle dieser Gaußfunktionen könnten auch andere Funktionen gewählt werden, wie oben bereits erläutert.

Gemeinsam für alle gültigen Funktionen ist, dass sie sogenannte positiv definite Kernfunktionen sind.

Das heißt, dass die Gram-Matrix aus den Kernfunktionen positiv definit sein muss. $k_1(t)$ stellt die zu dem Zeitpunkt $t_1$ definierte Funktion dar. $k(t_1,t_x) = k_1(t_x)$ stellt den Wert dar, den die zum Zeitpunkt $t_1$ definierte Funktion zum Wert $t_x$ liefert.

Wenn man nun aus dieser Funktion die Gram-Matrix $K$

$$(2) \qquad K = \begin{bmatrix} k(t_1,t_1) & \dots & k(t_1,t_n) \\ \vdots & \ddots & \vdots \\ k(t_n,t_1) & \cdots & k(t_n,t_n) \end{bmatrix}$$

erstellt, dann ist diese positiv definit.

Positiv definit bedeutet, dass das in dem folgenden Ausdruck (3) dargestellte Vektorprodukt positiv ist:

$$(3) \qquad \begin{pmatrix} \alpha_1^x & \alpha_2^x & \alpha_3^x \end{pmatrix} \cdot \begin{pmatrix} k(t_1 t_1) & k(t_1 t_2) & k(t_1 t_3) \\ k(t_2 t_1) & k(t_2 t_2) & k(t_2 t_3) \\ k(t_3 t_1) & k(t_3 t_2) & k(t_3 t_3) \end{pmatrix} \begin{pmatrix} \alpha_1^x \\ \alpha_2^x \\ \alpha_3^x \end{pmatrix} > 0$$

Bei dem hier dargestellten Verfahren wird ein derartiges Vektorprodukt als Regularisierungsterm eingesetzt.

Die Annahme der Funktionen wird somit zur Regularisierung verwendet. Man kann diesen Term (3) auch "Bestrafungsterm" nennen. Hat man Funktionen gewählt, die dem dynamischen System nicht entsprechen, ändern sich die Koeffizienten $\alpha_1^x$, $\alpha_2^x$, $\alpha_3^x$ usw. entsprechend. Diese müssen dann entsprechend größer werden, um diese Funktion wieder anzupassen. Durch die Anwendung der Koeffizienten auf die Gram-Matrix ergibt sich dann der passende Regularisierungsterm. Dieser Regularisierungsterm beschreibt, wie passend die entsprechende Funktion $k(t, t_i)$ die Dynamik beschreibt.

Die Koeffizienten $\alpha_1^x$, $\alpha_2^x$, $\alpha_3^x$. werden durch Optimierung, d.h. insbesondere Minimierung des Terms (3) erhalten. Genauer wird ein damit gebildetes Risikofunktional optimiert, wie die im folgenden noch näher erläutert wird.

Damit kann man eine weitere Bestimmungsgröße in das System einbringen, um dann das oben genannte Problem eindeutig zu lösen.

Im Rahmen der folgenden genaueren Darstellung der Methodik werden folgende Bezeichnungen verwendet:

| | |
|---|---|
| $\{t_1, ..., t_n\} \in \Re$ | Zeitpunkte, zu denen (Abstands-)Messungen vorliegen |
| $x(t) \in \Re^3$ | Position des zu lokalisierenden Objekts zum Zeitpunkt $t$ |
| $\{p_1, ..., p_k\} \in \Re^3$ | Positionen der für die Messungen zur Verfügung stehenden Positionsmarken |
| $\{r_1, ..., r_n\} \in \Re$ | Abstandsmessungen |
| $\{a_1, ..., a_n\} \in N$ | Indizierung der Positionsmarken pro Messung. Bsp.: Die $i$-te Messung $r_i$ misst den Abstand des Objekts mit der Position $x(t_i)$ zur Positionsmarke mit der Bezeichnung $a_i$. |

Die gesuchte Bahnkurve $x(t)$ wird folgendermaßen parametrisiert:

$$(4) \qquad x(t) = \sum_{i=1}^{n} \alpha_i k(t, t_i)$$

Die Funktionen $k(t, t_i)$ bilden die Basis des RKHS. Die Bahnkurve $x(t)$ wird vollständig durch die Koeffizienten-vektoren $\alpha_1, ..., \alpha_n$ aus dem $R^3$ beschrieben. Man benutzt demnach genauso viele Funktionen, wie man Messungen hat. Für die Messung zum Zeitpunkt $t_1$ gibt es dann die Funktion $k(t, t_1)$. Für die Messung zum Zeitpunkt $t_2$ gibt es die Funktion $k(t, t_2)$ usw..

Für das hier dargestellte Verfahren ist vorgesehen, dass es sich bei den Basisfunktionen $k(t, t_i)$ um so genannte positiv definite Kernfunktionen [1] handelt. Eine typische Wahl für eine positiv definite Kernfunktion hat die Form einer Gauss-Glocke (5):

$$(5) \qquad k(t, t') = \exp\left(-\frac{\|t - t'\|^2}{2\sigma^2}\right)$$

Dabei stellt, wie für Gauss-Glocken üblich, $\sigma$ als Standardabweichung ein Maß für die Breite der Gauss-Kurve dar. Je nach Dynamik des Systems sollte diese geringer (hohe Dynamik) oder breiter (geringe Dynamik) gewählt werden. Mit den Doppelstrichen ist hier der Betrag, auch gegebenenfalls Vektorbetrag, angegeben.

Die für die entsprechende Anwendung geeignete Kernfunktion kann aber beispielsweise auch offline über die Impulsantwort des zu untersuchenden dynamischen Systems bestimmt werden. Es kann sogar gezeigt werden, dass diese Wahl der Kernfunktion unter gewissen Vorraussetzungen als ideal gelten darf. Die Kernfunktionen modelliert auf diese Weise die Dynamik des Systems.

Im Folgenden wird nun dargestellt, wie die Positionen der Positionsmarken sowie die Koeffizientenvektoren abgeschätzt werden können.

Zu Beginn einer Lokalisierung des sich in der unbekannten Umgebung bewegenden Objekts wird von keinerlei Vorwissen ausgegangen. Es soll zunächst eine erste Lösung für die Bahnkurve sowie für die Positionen der bis dahin in Erscheinung getretenen Positionsmarken 12, 14, 16 gewonnen werden.

Es werden alle bis dahin vorhandenen Daten zur Berechnung herangezogen. Mittels eines mathematischen Optimierungsverfahrens (z.B.: Levenberg-Marquardt Methode,...) wird die Lösung für die Koeffizienten der Bahnkurve sowie der Positionen der Positionsmarken durch Minimierung des folgenden Ausdrucks - "regularisiertes Risikofunktional" - (6) gewonnen:

$$(6) \qquad R_{reg}(\alpha, p) = \underbrace{\frac{1}{n}\sum_{i=1}^{n}(\| x_i - p_{a_i} \| - r_i)^2}_{} + \underbrace{\mu(\alpha_x^{n^T} K \alpha_x^n + \alpha_y^{n^T} K \alpha_y^n + \alpha_z^{n^T} K \alpha_z^n)}_{}$$

$$\underbrace{\hspace{3cm}}_{Risikofunktional} \quad \underbrace{\hspace{3cm}}_{Kostenfunktion} \quad \underbrace{\hspace{5cm}}_{Regularisierungsterm}$$

Die Lösung für $\alpha$ und für $p$ kann somit folgendermaßen dargestellt werden:

$$\arg\min_{\alpha, p} R_{reg}(\alpha, p)$$

$K$ ist dabei die Gram Matrix

$$K = \begin{bmatrix} k(t_1, t_1) & \dots & k(t_1, t_n) \\ \vdots & \ddots & \vdots \\ k(t_n, t_1) & \cdots & k(t_n, t_n) \end{bmatrix}$$

$\alpha_x^n, \alpha_y^n$ und $\alpha_z^n$ die Koeffizientenvektoren

$$\alpha_x^n = (\alpha_1^x, ..., \alpha_n^x)^T \quad \alpha_y^n = (\alpha_1^y, ..., \alpha_n^y)^T \quad \alpha_z^n = (\alpha_1^z, ..., \alpha_n^z)^T$$

sowie

$$p^k = (p_1^x, p_1^y, p_1^z, ..., p_k^x, p_k^y, p_k^z)^T$$

ein Vektor der die Positionen der Positionsmarken enthält.

Das hochgestellte $T$ heißt hier, dass der Vektor transponiert ist. Das Vektorprodukt wird also einmal mit liegendem und einmal mit stehendem Vektor durchgeführt.

Der skalare Parameter $\mu$ ist ein an die jeweilige Applikation anzupassender bzw. zu optimierender Parameter der die Gewichtung zwischen Regularisierung *(Regularisierungsterm)* und Minimierung der quadratischen Fehler (*Kostenfunktion*) darstellt. Der skalare Parameter kann durch Versuch empirisch ermittelt werden und eventuell auch an der Auswerteeinrichtung zur Anpassung einstellbar ausgebildet sein.

Der Vektor $x_i$ stellt den Ort des Objekts zum Zeitpunkt $t_i$ dar. Dieser unbekannte Wert wird in Gleichung (6) entsprechend Gleichung (4) wie folgt eingesetzt:

$$(7) \qquad x_i = x(t_i) = \sum_{j=1}^{n} \alpha j k(t_i, t_j).$$

Voll ausgeschrieben lautet somit das zu minimierende Risikofunktional:

$$(8) \qquad R_{reg}(\alpha, p) = \frac{1}{n} \sum_{i=1}^{n} (\| \sum_{j=1}^{n} \alpha_j k(t_i, t_j) - p_{a_i} \| - r_i)^2 + \mu(\alpha_x^{n^T} K \alpha_x^n + \alpha_y^{n^T} K \alpha_y^n + \alpha_z^{n^T} K \alpha_z^n)$$

Als Ergebnis der Minimierung erhält man schließlich eine erste Schätzung für die Wahrscheinlichkeitsverteilung der Positionen des zu lokalisierenden Objekts sowie der Positionen der Positionsmarken.

Eine Schätzung für die Kovarianzmatrix der einzelnen Parameter kann beispielsweise mittels der "Laplaceschen Methode" aus der Hesse-Matrix des regularisierten Risikofunktionals gewonnen werden. Die Kovarianzmatrix gibt an, wie gut die durch das hier vorgestellte Verfahren durchgeführte Schätzung ist. Sie kann in einem späteren Verlauf einer Weiterführung einer andauernden Lokalisierung zur Bildung eines hierzu verwendeten Kalman-Filter verwendet werden.

*Bemerkung:* Für die Minimierung des oben genannten Terms (6) kann es vorteilhaft sein, statt der Koeffizienten $\alpha^n$ direkt die Eigenvektoren der Gram-Matrix $K$ als alternative Basis zu verwenden.

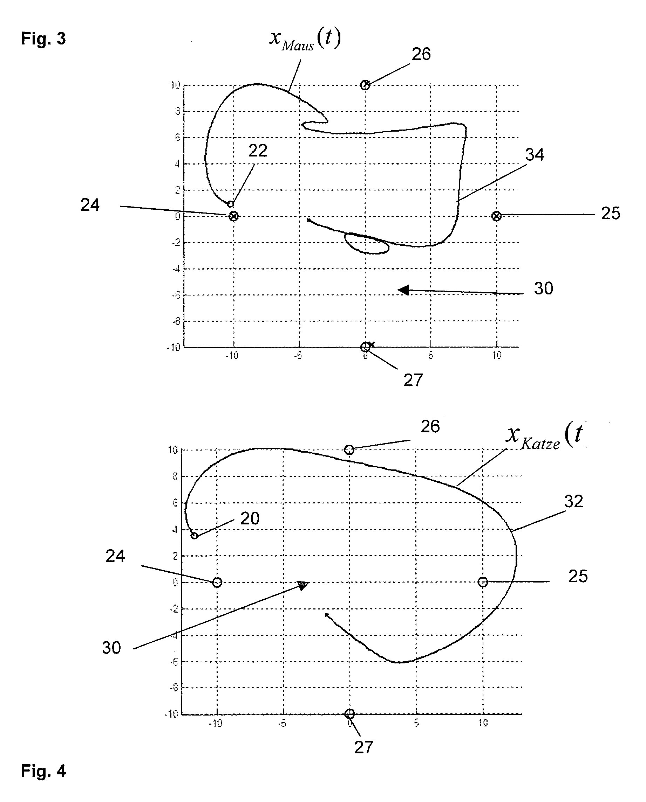

Im Folgenden wird anhand der Figuren 3 bis 15 eine konkrete Anwendung des soeben beschriebenen Lokalisierungsverfahrens auf ein konkretes einfaches Beispiel beschrieben. Das folgende konkrete Beispiel soll insbesondere auch den Einfluss der Kernfunktion auf die Lösung deutlich machen.

In dem Beispiel jagt eine Katze 20 eine Maus 22 durch einen Raum 30, in dem sich vier Gegenstände 24, 25, 26, 27 unbekannter Position befinden, die zu unkontrollierbaren Zeitpunkten ihre Abstände zu Maus 22 und Katze 20 messen. Die Bewegung der Maus 22 durch den Raum wird in Fig. 3 und die Bewegung der Katze 20 durch den Raum wird in Fig. 4 illustriert. Die Katze 20 und die Maus 22 sind Beispiele für sich in einer unbekannten Umgebung, hier dem Raum 30, bewegende Objekte, die nun lokalisiert werden sollen. Die vier Gegenstände 24, 25, 26, 27 stellen vier Knoten eines Knotennetzwerks und die erste bis vierte Positionsmarke $p_1$, $p_2$, $p_3$, $p_4$ dar.

In den Fig. 3 und 4 stellt die x-Achse des Graphen die räumliche x-Achse in der Einheit Meter dar, während die y-Achse die räumliche y-Achse ebenfalls in der Einheit Meter darstellt. Mit 32 ist die Bewegungskurve $x_{Katze}(t)$ der Katze und mit 34 ist die Bewegungskurve $x_{Maus}(t)$ bezeichnet.

Deutlich zu sehen ist die höhere Wendigkeit der Maus 22. Während die Maus 22 kurze Haken schlagen kann, um die Katze 20 abzuschütteln, rennt die Katze 20 wegen ihrer größeren Masse wesentlich geradliniger und muss sogar nach einer scharfen Wendung der Maus um den zweiten Gegenstand 25 herumlaufen.

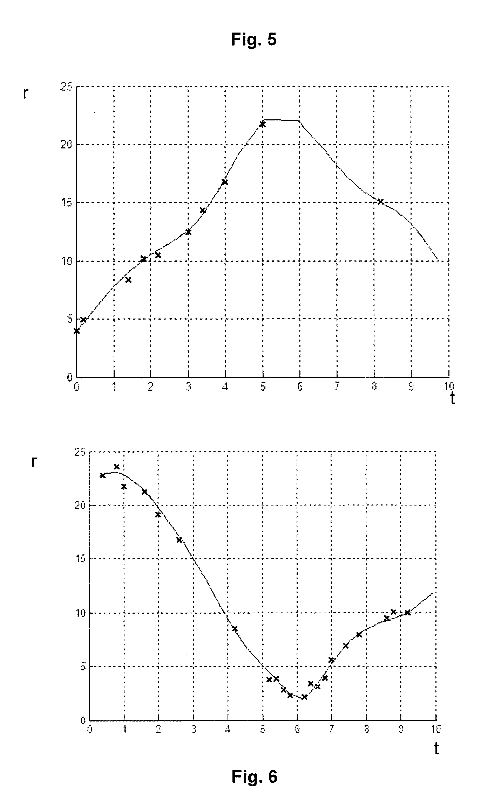

Für die Katze werden für die vier Gegenstände 24, 25, 26, 27 die in den Graphen der Figuren 5 bis 8 angegebenen Abstände gemessen. Darin sind jeweils auf der y-Achse die Abstände in Meter und auf der x-Achse die Zeit in Sekunden aufgetragen. Die durchgezogene Kurve gibt den realer Abstand zwischen Katze 20 und entsprechendem Gegenstand 24, 25, 26, 27 an, während die Kreuze die fehlerbehafteten einzelnen Messwerte anzeigen.

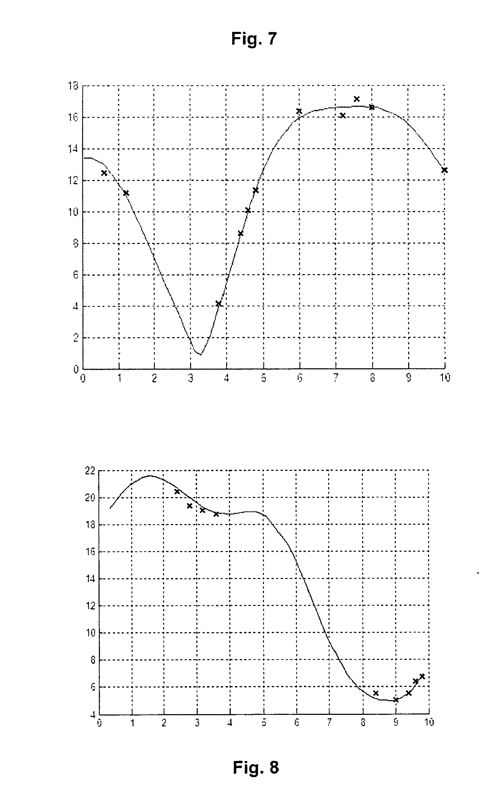

Fig. 5 zeigt die Abstände der Katze 20 zu dem ersten Gegenstand 24; Fig. 6 zeigt die Abstände der Katze 20 zu dem zweiten Gegenstand 25; Fig. 7 zeigt die Abstände der Katze 20 zu dem dritten Gegenstand 26; und Fig. 8 zeigt die Abstände der Katze 20 zu dem vierten Gegenstand 24.

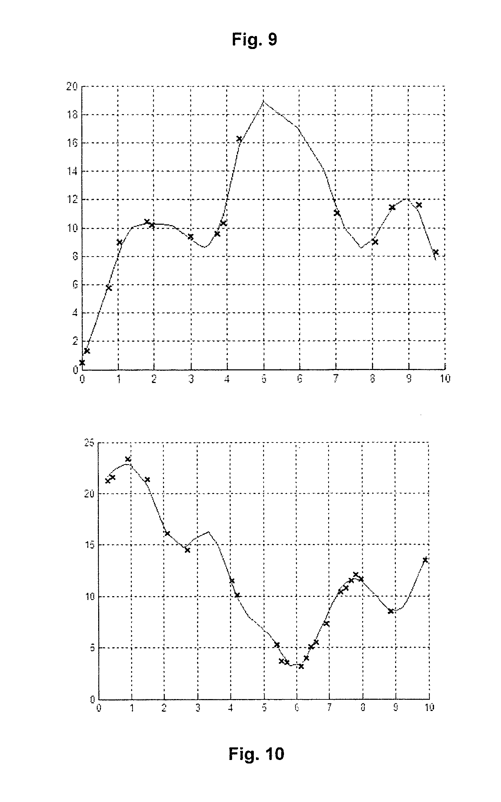

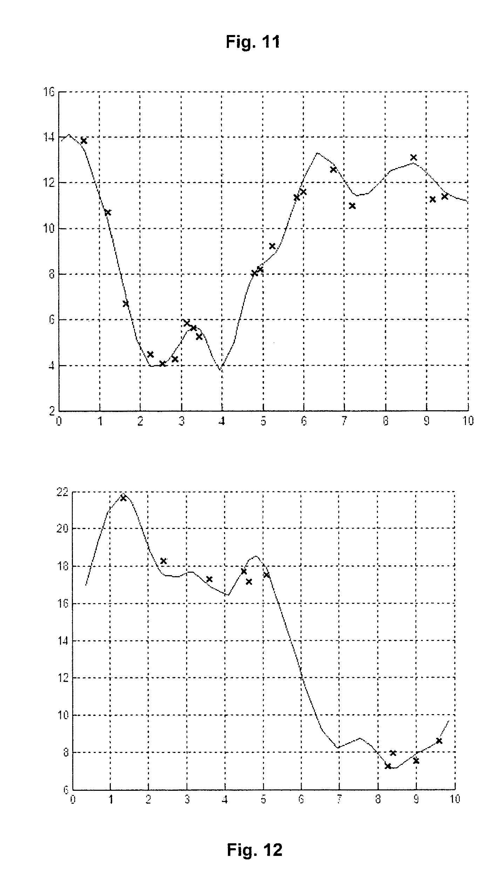

In analoger Weise zeigen die Figuren 9 bis 12 die entsprechenden Abstände der Maus 22 zu den Gegenständen 24, 25, 26, 27, wobei Fig. 9 die Abstände zu dem ersten Gegenstand 24, Fig. 10 die Abstände zu dem zweiten Gegenstand 25, Fig. 11 die Abstände zu dem dritten Gegenstand 26 und Fig. 12 die Abstände zu dem vierten Gegenstand 27 zeigt.

Insgesamt über alle Knoten bzw. Positionsmarken gesehen beträgt die Anzahl der gemessenen Abstände für die Bewegung der Katze 51, für die Maus 67.

Dabei wurde für die für die Abstandsmessungen als Verteilung ein Rauschmodell angenommen, das einem normal verteilten Rauschen mit einer Standardabweichung von 0,4 Metern entspricht.

Für beide Beispiele wurden nun mit dem vorgestellten Verfahren die Bahnkurve sowie die Positionen der Messknoten - Gegenstände 24, 25, 26, 27, d.h. Positionsmarken - bestimmt.

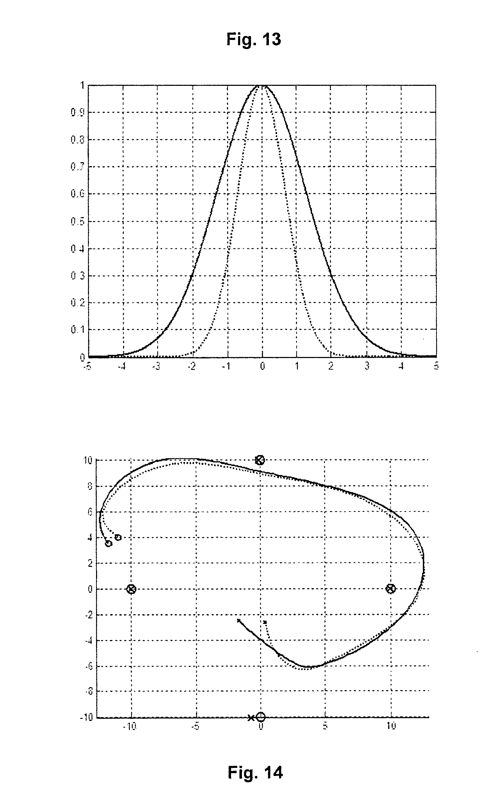

Als Kernfunktion wurden verschiedene "Gauß-Glocken" für die Bewegung der Katze 20 und der Maus 22 verwendet, die in Fig. 13 dargestellt sind. Dabei stellt die gepunktete Linie die Kernfunktion für die Lokalisierung der Maus 22 und die durchgezogene Linie die Kernfunktion für die Lokalisierung der Katze 20 dar.

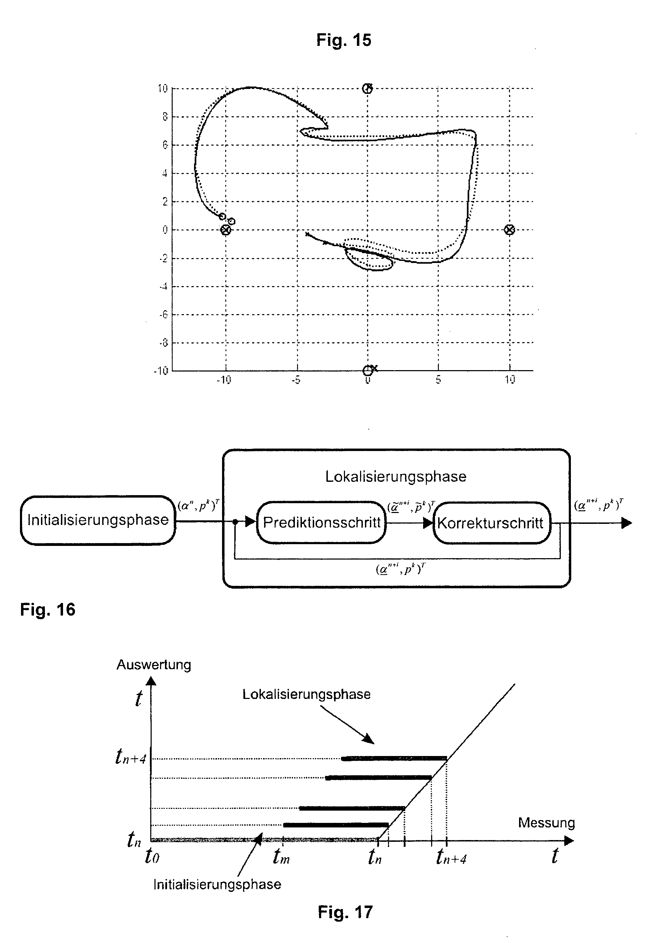

Mit der Durchführung des oben erläuterten Verfahrens inklusive der Optimierung des regularisierten Risikofunktionals (6) ergeben sich die in den Fig. 14 und 15 dargestellten Ergebnisse für die Bahn der Katze 20 (Fig. 14) und der Maus 22 (Fig. 15) sowie für die Positionen der Gegenstände 24, 25, 26, 27. Die Ergebnisse für die Bahn sind jeweils als gepunktete Linien dargestellt, während die durchgezogenen Linie zum Vergleich die tatsächliche Bewegung angibt.

Wie aus den Figuren 14 und 15 ersichtlich, liefert das hier dargestellte Verfahren trotz der sehr geringen Information aus den Abstandsmessungen relativ genaue Annäherungen für die tatsächlichen Bewegungskurven.

Das vorgestellte Verfahren kann daher recht gut zur Lokalisierung von Objekten durch Nutzung nur sehr einfacher und daher kostengünstiger Messtechnik herangezogen werden. Alternativ kann das Verfahren auch bei recht hochwertiger Messtechnik, aber unter erschwerten Empfangsbedingungen wie zum Beispiel in Gebäuden oder Tunneln, in Bergwerken oder dergleichen oder auch auf militärischem Gebiet, z.B. bei Rettungs- oder Sturmaktionen angewandt werden, wo eine ständige synchronisierte Abstandsmessung wie bisher notwendig, nicht gewährleistet werden kann. Z.B. ist auch ein Einsatz auf fremden Schiffen, beispielsweise bei Befreiungsaktionen von von Piraten besetzter Schiffe denkbar. Insbesondere können die Positionsmarken durch sehr einfache Sender oder sonstige einfache Geräte zur Entfernungsmessung gebildet werden, die nach dem Abwerfen oder Gebrauch ganz einfach am Ort gelassen werden können.

Wie die Beispiele zeigen, ist das Verfahren auch recht brauchbar für eine Lokalisierung bei Vorlage relativ geringer Anzahlen von Messwerten (z.B. unter 100 oder wenige einhundert).

Wenn jedoch die Messungen andauern, ergeben sich mit der Zeit immer mehr Messungen, die eine ständige Optimierung mit dem bisher beschriebenen Verfahren immer komplexer und daher aufwändiger machen, so dass die Berechnungen auch immer länger dauern.

Daher wird bei einer bevorzugten Ausgestaltung einer Lokalisierungsmethode das bisher beschriebene Verfahren, bei dem sämtliche Messwerte verwendet werden, um damit die Lage des Objektes und aller in Aktion tretenden Positionsmarken zu bestimmen, nur in einer Initialisierungsphase zu Beginn durchgeführt. Die Gesamtmethodik könnte dann aussehen, wie in Fig. 16 dargestellt. Demnach weist diese Gesamtmethodik neben der Initialisierungsphase noch eine hier als Lokalisierungsphase bezeichnete weitere Phase auf.

Auf Basis der in der Initialisierungsphase gewonnenen ersten Schätzungen für $\alpha^n$ und $p^k$ werden in der Lokalisierungsphase die Positionsmarkenpositionen und die Koeffizienten ähnlich einem Kalman-Filter kontinuierlich geschätzt. Durch das oben beschriebene Design der Lösung als gewichtete Summe von Kernfunktionen wächst dabei die Anzahl der Parameter stetig an.

Für jede neue Abstandmessung zum Zeitpunkt $t_i$ kommt ein neuer Parameter (in Form eines Koeffizientvektors) $\alpha_i$ hinzu. Im Unterschied zur Initialisierungsphase werden während der Lokalisierungsphase jeweils nur diejenigen Koeffizienten geschätzt, die Einfluss auf die aktuelle Position haben. Diejenigen Koeffizienten, welche zu noch weiter zurückliegenden Messungen korrespondieren und deren Schätzung durch die aktuelle Messung auch nicht mehr verbessert werden können, werden als Vorwissen in Form von konstanten Parametern verwendet.

Mit der Annahme dass

$$k(t,t') \approx 0$$

für alle

$$|t - t'| > T \,,$$

wobei T eine Zeitspanne angibt, ab der der Einfluss weiter zurückliegender Messungen vernachlässigbar ist, ergibt sich hiermit, dass zum Zeitpunkt $t_{n+1}$ für die Bahnkurve lediglich die Koeffizienten

$$\underline{\alpha}^{n+i} = (\alpha_m^x, \alpha_m^y, \alpha_m^z, ..., \alpha_{n+1}^x, \alpha_{n+1}^y, \alpha_{n+1}^z)^T$$

geschätzt werden müssen, falls

$$|t_{n+1} - t_m| > T \,.$$

In der Darstellung der Fig. 17 werden für die Initialisierungsphase und die Lokalisierungsphase die Zeitintervalle, in welchen die Messungen verwendet werden, und Zeitpunkte der Auswertung grafisch dargestellt.

Der Parametervektor $p^k$ für die Schätzungen der Positionsmarkenpositionen wird dabei dynamisch vergrößert, falls eine neue Positionsmarke in Erscheinung tritt. Es können also auch ständig neue Positionsmarken hinzutreten; das System ist entsprechend flexibel.

Wie beim Kalman-Filter wird vorgeschlagen, dass bei jeder neuen Lokalisierung ein

- **Prediktionsschritt,** in welchem auf Basis der bis dahin gefundenen Lösung für $(\alpha^n, p^k)^T$ bzw. $(\underline{\alpha}^{n+i-1}, p^k)^T$ eine Schätzung für die neue Lösung $(\underline{\tilde{\alpha}}^{n+i}, \tilde{p}^k)^T$ erzeugt wird,

und im Anschluss darauf ein

- **Korrekturschritt** durchgeführt wird, der die predizierte Lösung durch erneute Minimierung des bereits in oben bei der Gleichung (6) angegebenen Optimierungsproblems für den entsprechenden neuen Koeffizientensatz zu einer neuen Lösung $(\underline{\alpha}^{n+i}, p^k)^T$ verbessert.

**Bezugszeichenliste:**

| 10 | Objekt |
|----|--------|
| 11 | Bewegungskurve |
| 12 | erste Positionsmarke |
| 14 | zweite Positionsmarke |
| 16 | dritte Positionsmarke |
| 20 | Katze (erstes Objekt) |
| 22 | Maus (zweites Objekt) |
| 24 | erster Gegenstand (erste Positionsmarke $p_1$) |
| 25 | zweiter Gegenstand (zweite Positionsmarke $p_2$) |
| 26 | dritter Gegenstand (dritte Positionsmarke $p_3$) |
| 27 | vierter Gegenstand (vierte Positionsmarke $p_4$) |
| 30 | Raum (unbekannte Umgebung) |
| 32 | Bewegungskurve $x_{Katze}(t)$ der Katze |
| 34 | Bewegungskurve $x_{Maus}(t)$ der Maus |

**Patentansprüche**

1. Verfahren zur Lokalisierung eines sich in einer unbekannten Umgebung bewegenden Objekts (10, 20, 22) mit:

Vorsehen von $k$ Positionsmarken (12, 14, 16; 22, 24, 25, 26, 27) an unbestimmten voneinander beabstandeten Positionen $p_1, p_2 \ldots, p_k$ mit $\{p_1, \ldots, p_k\} \in \Re^3$, wobei $k$ eine natürliche Zahl größer oder gleich 3 ist,

wiederholtes Messen des Abstands zwischen Objekt (10, 20, 22) und Positionsmarke (12, 14, 16; 22, 24, 25, 26, 27) für jede der Positionsmarken (12, 14, 16; 22, 24, 25, 26, 27) unabhängig voneinander zu unkontrollierten Zeitpunkten, so dass zu den Zeitpunkten $\{t_1, \ldots, t_n\} \in \Re$ die Abstandswerte $\{r_1, \ldots, r_n\} \in \Re$ vorliegen, und

Ermitteln einer Bewegungskurve $x(t) \in \mathrm{R}^3$ über

$$x(t) = \sum_{i=1}^{n} \alpha_i k(t, t_i),$$

wobei n die Anzahl der verwendeten Abstandsmessungen und jede Funktion $k(t, t_i)$ eine positiv definite Kernfunktion ist und wobei $\{\alpha_1, \ldots, \alpha_n\} \in \Re^3$ Koeffizientenvektoren sind, die durch Glattheitsbedingungen mittels eines mit den Kernfunktionen gebildeten Regularisierungsterms abgeschätzt werden, wobei das Abschätzen der Positionen $\{p_1, \ldots, p_k\} \in \Re^3$ der Positionsmarken (12, 14, 16; 22, 24, 25, 26, 27) und der Koeffizientenvektoren $\{\alpha_1, \ldots, \alpha_n\} \in \Re^3$ durch Minimierung eines regularisierten Risikofunktionals erfolgt, welches bei Verwendung kartesischer Koordinaten in der Form

$$R_{reg}(\alpha^n, p^k) = \frac{1}{n}\sum_{i=1}^{n}(\| x_i - p_{a_i} \| - r_i)^2 + \mu(\alpha_x^{n^T} K \alpha_x^n + \alpha_y^{n^T} K \alpha_y^n + \alpha_z^{n^T} K \alpha_z^n)$$

mit $x_i = x(t_i) = \sum_{j=1}^{n} \alpha_j k(t_i, t_j)$ darstellbar ist, wobei

$K$ die Gram-Matrix $K = \begin{bmatrix} k(t_1,t_1) & \dots & k(t_1,t_n) \\ \vdots & \ddots & \vdots \\ k(t_n,t_1) & \cdots & k(t_n,t_n) \end{bmatrix}$; $\quad \alpha_x^n, \alpha_y^n$ und $\alpha_z^n$ die x-, y-, und z-Koordinaten

der Koeffizientenvektoren mit

$$\alpha_x^n = (\alpha_1^x,...,\alpha_n^x)^T, \quad \alpha_y^n = (\alpha_1^y,...,\alpha_n^y)^T, \quad \alpha_z^n = (\alpha_1^z,...,\alpha_n^z)^T,$$

und $\alpha^n=(\alpha_1,...,\alpha_n)$ mit

$$\alpha_1 = \begin{pmatrix} \alpha_1^x & \alpha_1^y & \alpha_1^z \end{pmatrix}, \ \alpha_2 = \begin{pmatrix} \alpha_2^x & \alpha_2^y & \alpha_2^z \end{pmatrix}, \ ..., \ \alpha_n = \begin{pmatrix} \alpha_n^x & \alpha_n^y & \alpha_n^z \end{pmatrix};$$

$p^k$ ein Vektor, der die Positionen $\{p_1,...,p_k\} \in \Re^3$ der Positionsmarken (12, 14, 16; 22, 24, 25, 26, 27) enthält und insbesondere in einer Form $p^k = (p_1^x, p_1^y, p_1^z,..., p_k^x, p_k^y, p_k^z)^T$ darstellbar ist; und

$\mu$ ein an das jeweilige Objekt (10, 20, 22), insbesondere durch empirische Ermittlung, anzupassender skalarer Parameter zur Gewichtung zwischen dem Regularisierungsterm $(\alpha_x^{n^T} K \alpha_x^n + \alpha_y^{n^T} K \alpha_y^n + \alpha_z^{n^T} K \alpha_z^n)$ und

der Kostenfunktion $\frac{1}{n}\sum_{i=1}^{n}(\| x_i - p_{a_i} \| - r_i)^2$

darstellt.

**2.** Verfahren nach Anspruch 1,
**gekennzeichnet durch**
Verwenden von Gaußfunktionen als positiv definite Kernfunktion, insbesondere in Form

$$k(t,t') = \exp(-\frac{\| t - t' \|^2}{2\sigma^2}).$$

**3.** Verfahren nach Anspruch 2,
**dadurch gekennzeichnet,**
**dass** die Standardabweichung $\sigma$ entsprechend der Dynamik des Objekts (10, 20, 22) derart ausgewählt wird, dass bei einem Objekt (22) mit sich schneller in Betrag und/oder Richtung ändernder Bewegung eine kleinere Standardabweichung als bei einem Objekt (20) mit sich in Betrag und/oder Richtung langsamer ändernder Bewegung.

**4.** Verfahren nach Anspruch 1,

**gekennzeichnet durch**
Bestimmen einer eine Impulsantwort des **durch** die Bewegung des Objekts (10, 20, 22) gebildeten dynamischen Systems anzeigende Impulsantwort-Funktion und Verwenden der Impulsantwort-Funktion als Kernfunktion k(t, t') zum Ermitteln der Bewegungskurve.

5. Verfahren nach einem der voranstehenden Ansprüche,
   **gekennzeichnet durch**
   Bilden des Regularisierungsterms aus einem Vektorprodukt der Koeffizientenvektoren mit der Gram-Matrix der Kernfunktionen.

6. Verfahren nach einem der voranstehenden Ansprüche,
   **dadurch gekennzeichnet,**
   **dass** das Vorsehen von Positionsmarken (12, 14, 16; 22, 24, 25, 26, 27) Verwenden von ortsfesten Sendern oder Sende-Empfängern als Positionsmarken umfasst und
   **dass** das Messen Ermitteln des Abstandes des jeweiligen Senders oder Sende-Empfängers zu einem mit dem Objekt (10) mitbewegten Empfänger oder Sende-Empfänger umfasst.

7. Vorrichtung zur Durchführung des Verfahrens nach einem der voranstehenden Ansprüche und/oder zur Lokalisierung eines sich in einer unbekannten Umgebung bewegenden Objekts (10, 20, 22) mit:

   einer Messeinrichtung, die zum wiederholten Messen des Abstands zwischen dem Objekt (10, 20, 22) und wenigstens drei an unbestimmten Positionen fest angeordneten Positionsmarken (12, 14, 16; 22, 24, 25, 26, 27) für jede der Positionsmarken unabhängig voneinander zu einer Reihe von Zeitpunkten ausgebildet ist und zur Ausgabe von zu den Zeitpunkten $\{t_1, ..., t_n\} \in \Re$ ermittelten Abstandswerten $\{r_1, ..., r_n\} \in \Re$ fähig ist und
   einer Auswerteeinrichtung zum Ermitteln einer Bewegungskurve $x(t) \in R^3$ über

   $$x(t) = \sum_{i=1}^{n} \alpha_i k(t, t_i),$$

   wobei n die Anzahl der verwendeten Abstandsmessungen und jede Funktion $k(t, t_j)$ eine positiv definite Kernfunktion ist und wobei $\{\alpha_1, ..., \alpha_n\} \in \Re^3$ Koeffizientenvektoren sind, und wobei die Auswerteeinrichtung zum Abschätzen der Koeffizientenvektoren durch Glattheitsbedingungen mittels eines mit den Kernfunktionen gebildeten Regularisierungsterms eingerichtet ist, wobei das Abschätzen der Positionen $\{p_1, ..., p_k\} \in \Re^3$ der Positionsmarken (12, 14, 16; 22, 24, 25, 26, 27) und der Koeffizientenvektoren $\{\alpha_1, ..., \alpha_n\} \in \Re^3$ durch Minimierung eines regularisierten Risikofunktionals erfolgt, welches bei Verwendung kartesischer Koordinaten in der Form

   $$R_{reg}(\alpha^n, p^k) = \frac{1}{n}\sum_{i=1}^{n}(\| x_i - p_{a_i} \| - r_i)^2 + \mu(\alpha_x^{n^T} K \alpha_x^n + \alpha_y^{n^T} K \alpha_y^n + \alpha_z^{n^T} K \alpha_z^n)$$

   mit $x_i = x(t_i) = \sum_{j=1}^{n} \alpha_j k(t_i, t_j)$ darstellbar ist, wobei

$K$ die Gram-Matrix $K = \begin{bmatrix} k(t_1,t_1) & \dots & k(t_1,t_n) \\ \vdots & \ddots & \vdots \\ k(t_n,t_1) & \cdots & k(t_n,t_n) \end{bmatrix}$;

$\alpha_x^n, \alpha_y^n$ und $\alpha_z^n$ die x-, y-, und z-Koordinaten der Koeffizientenvektoren mit

$$\alpha_x^n = (\alpha_1^x,...,\alpha_n^x)^T, \quad \alpha_y^n = (\alpha_1^y,...,\alpha_n^y)^T, \quad \alpha_z^n = (\alpha_1^z,...,\alpha_n^z)^T,$$

und $\alpha^n = (\alpha_1,...,\alpha_n)$ mit

$$\alpha_1 = \begin{pmatrix} \alpha_1^x & \alpha_1^y & \alpha_1^z \end{pmatrix}, \; \alpha_2 = \begin{pmatrix} \alpha_2^x & \alpha_2^y & \alpha_1^z \end{pmatrix}, \; ..., \; \alpha_n = \begin{pmatrix} \alpha_n^x & \alpha_n^y & \alpha_n^z \end{pmatrix};$$

$p^k$ ein Vektor, der die Positionen $\{p_1,...,p_k\} \in \mathfrak{R}^3$ der Positionsmarken (12, 14, 16; 22, 24, 25, 26, 27) enthält und insbesondere in einer Form $p^k = (p_1^x, p_1^y, p_1^z,..., p_k^x, p_k^y, p_k^z)^T$ darstellbar ist; und

$\mu$ ein an das jeweilige Objekt (10, 20, 22), insbesondere durch empirische Ermittlung, anzupassender skalarer Parameter zur Gewichtung zwischen dem Regularisierungsterm $(\alpha_x^{nT} K \alpha_x^n + \alpha_y^{nT} K \alpha_y^n + \alpha_z^{nT} K \alpha_z^n)$ und

der Kostenfunktion $\frac{1}{n}\sum_{i=1}^{n}(\| x_i - p_{a_i} \| - r_i)^2$ darstellt.

8. Vorrichtung nach Anspruch 7,
**dadurch gekennzeichnet,**
**dass** die Messeinrichtung wenigstens drei Positionsmarkenmarkierungseinrichtungen, insbesondere Sender oder Sendeempfänger oder Reflektoren oder Repetitoren, zum Bilden oder Markieren der wenigstens drei Positionsmarken (12, 14, 16; 22, 24, 25, 26, 27) und wenigstens eine Objektmarkierungseinrichtung, insbesondere Empfänger oder Sende-Empfänger, aufweist, wobei die Messeinrichtung zum einzelnen Feststellen der Abstände zwischen den Positionsmarkenmarkierungseinrichtungen und der Objektmarkierungseinrichtung unter Identifizierung der jeweils vermessenen Positionsmarkenmarkierungseinrichtung eingerichtet ist.

9. Verwendung des Verfahrens nach einem der Ansprüche 1 bis 6 und/oder der Vorrichtung nach einem der Ansprüche 7 oder 8 zur Lokalisierung und Kartenbildung aufgrund von Abstandsdaten.

10. Verwendung des Verfahrens nach einem der Ansprüche 1 bis 6 und/oder der Vorrichtung nach einem der Ansprüche 7 oder 8 zur Orientierung in einem unbekannten Terrain oder Gebäude.

11. Verwendung nach Anspruch 10,
**dadurch gekennzeichnet,**
**dass** die Positionsmarken an unterschiedlichen Orten nahe des Terrains oder Gebäudes angebracht oder abgeworfen werden.

**Claims**

1. A method for locating an object (10, 20, 22) moving in an unknown environment, comprising:

providing *k* position markers (12, 14, 16; 22, 24, 25, 26, 27) at undetermined spacedapart positions $p_1, p_2, ..., p_k$ with $\{p_1, ..., p_k\} \in \Re^3$, ' wherein *k* is a natural number greater than or equal to 3,

repeatedly measuring the distance between the object (10, 20, 22) and the position marker (12, 14, 16; 22, 24, 25, 26, 27) for each of the position markers (12, 14, 16; 22, 24, 25, 26, 27) independently of each other at uncontrolled points in time, so that the distance values $\{r_1, ..., r_n\} \in \Re$ are provided at the points in time $\{t_1, ..., t_n\} \in \Re$, and determining a trajectory $x(t) \in \Re^3$ by

$$x(t) = \sum_{i=1}^{n} \alpha_i k(t, t_i),$$

wherein n is the number of the distance measurements used and each function *k(t, t$_j$)* is a positive-definite kernel function, and wherein $\{\alpha_1, ..., \alpha_n\} \in \Re^3$ are coefficient vectors estimated using smoothness conditions by means of a regularization term formed with the kernel functions, the positions $\{p_1, ..., p_k\} \in \Re^3$ of the position markers (12, 14, 16; 22, 24, 25, 26, 27) and of the coefficient vectors $\{\alpha_1, ..., \alpha_n\} \in \Re^3$ being estimated by means of the minimization of a regularized risk functional, which, using Cartesian coordinates, can be represented in the form

$$R_{reg}(\alpha^n, p^k) = \frac{1}{n} \sum_{i=1}^{n} (\|x_i - p_{\alpha_i}\| - r_i)^2 + \mu(\alpha_x^{n^T} K \alpha_x^n + \alpha_y^{n^T} K \alpha_y^n + \alpha_z^{n^T} K \alpha_z^n)$$

with $x_i = x(t_i) = \sum_{j=1}^{n} \alpha_j k(t_i, t_j)$,

wherein

K represents the Gramian matrix $K = \begin{bmatrix} k(t_1, t_1) & ... & k(t_1, t_n) \\ \vdots & \ddots & \vdots \\ k(t_n, t_1) & ... & k(t_n, t_n) \end{bmatrix}$;

$\alpha_x^n$, $\alpha_y^n$ and $\alpha_z^n$ represent the x, y, and z coordinates of the coefficient vectors with

$$\alpha_x^n = (\alpha_1^x, ..., \alpha_n^x)^T, \quad \alpha_y^n = (\alpha_1^y, ..., \alpha_n^y)^T, \quad \alpha_z^n = (\alpha_1^z, ..., \alpha_n^z)^T$$

and $\alpha^n = (\alpha_1, ..., \alpha_n)$ with

$$\alpha_1 = (\alpha_1^x \quad \alpha_1^y \quad \alpha_1^z), \quad \alpha_2 = (\alpha_2^x \quad \alpha_2^y \quad \alpha_2^z), ..., \quad \alpha_n = (\alpha_n^x \quad \alpha_n^y \quad \alpha_n^z);$$

$p^k$ represents a vector containing the positions $\{p_1, ..., p_k\} \in \Re^3$ of the position markers (12, 14, 16; 22, 24, 25, 26, 27) and can, in particular, be represented in the form $p^k = (p_1^x, p_1^y, p_1^z, ..., p_k^x, p_k^y, p_k^z)^T$; and

$\mu$ represents a scalar parameter to be adapted to the respective object (10, 20, 22), particularly by empirical determination, for the weighting between the regularization term $(\alpha_x^{n^T} K \alpha_x^n + \alpha_y^{n^T} K \alpha_y^n + \alpha_z^{n^T} K \alpha_z^n)$ and the

cost function $\dfrac{1}{n}\sum_{i=1}^{n}(\left\|x_i - p_{\alpha_i}\right\| - r_i)^2$ .

2. The method according to claim 1,
   **characterised by**
   using Gaussian functions as the positive-definite kernel function, in particular in the form

$$k(t,t') = \exp(-\frac{\left\|t - t'\right\|^2}{2\sigma^2}) .$$

3. The method according to claim 2,
   **characterised in that**
   the standard deviation $\sigma$ is selected in accordance with the dynamics of the object (10, 20, 22) in such a way that a smaller standard deviation is selected in the case of an object (22) with a movement that changes more rapidly with regard to magnitude and/or direction than in the case of an object (20) with a movement that changes more slowly with regard to magnitude and/or direction.

4. The method according to claim 1,
   **characterised by**
   determining an impulse response function indicating an impulse response by the dynamic system formed by the movement of the object (10, 20, 22) and using the impulse response function as the kernel function k(t, t') for determining the trajectory.

5. The method according to any one of the preceding claims,
   **characterised by**
   forming the regularization term from a vector product of the coefficient vectors with the Gramian matrix of the kernel functions.

6. The method according to any one of the preceding claims,
   **characterised in that**
   the providing of position markers (12, 14, 16; 22, 24, 25, 26, 27) comprises the use of stationary transmitters or transceivers as position markers, and
   the measuring comprises the determination of the distance of the respective transmitter or transceiver to a transmitter or transceiver moved along with the object (10).

7. A device for carrying out the method according to any one of the preceding claims and/or for locating an object (10, 20, 22) moving in an unknown environment, comprising:

   a measuring device configured for repeatedly measuring the distance between the object (10, 20, 22) and at least three position markers (12, 14, 16; 22, 24, 25, 26, 27) fixedly disposed at undetermined positions for each of the position markers independently of each other at a series of points in time, and capable of outputting distance values $\{r_1,...,r_n\} \in \Re$ determined at the points in time $\{t_1,...,t_n\} \in \Re$ , and

   an evaluation device for determining a trajectory $x(t) \in \Re^3$ by

$$x(t) = \sum_{i=1}^{n}\alpha_i k(t,t_i) ,$$

   wherein n is the number of the distance measurements used and each function $k(t, t_i)$ is a positive-definite kernel function,

and wherein $\{\alpha_1,...,\alpha_n\} \in \Re^3$ are coefficient vectors, and wherein the evaluation device is configured for estimating the coefficient vectors using smoothness conditions by means of a regularization term formed with the kernel functions, wherein the positions $\{p_1,...,p_k\} \in \Re^3$ of the position markers (12, 14, 16; 22, 24, 25, 26, 27) and of the coefficient vectors $\{\alpha_1,...,\alpha_n\} \in \Re^3$ are estimated by means of the minimization of a regularized risk functional, which, using Cartesian coordinates, can be represented in the form

$$R_{reg}(\alpha^n, p^k) = \frac{1}{n}\sum_{i=1}^{n}(\|x_i - p_{\alpha_i}\| - r_i)^2 + \mu(\alpha_x^{n^T}K\alpha_x^n + \alpha_y^{n^T}K\alpha_y^n + \alpha_z^{n^T}K\alpha_z^n)$$

with $x_i = x(t_i) = \sum_{j=1}^{n}\alpha_j k(t_i, t_j)$,

wherein

K represents the Gramian matrix $K = \begin{bmatrix} k(t_1,t_1) & ... & k(t_1,t_n) \\ \vdots & \ddots & \vdots \\ k(t_n,t_1) & ... & k(t_n,t_n) \end{bmatrix}$;

$\alpha_x^n$, $\alpha_y^n$ and $\alpha_z^n$ represent the x, y, and z coordinates of the coefficient vectors with

$$\alpha_x^n = (\alpha_1^x,...,\alpha_n^x)^T, \ \alpha_y^n = (\alpha_1^y,...,\alpha_n^y)^T, \ \alpha_z^n = (\alpha_1^z,...,\alpha_n^z)^T$$

and $\alpha^n = (\alpha_1,...,\alpha_n)$ with

$$\alpha_1 = (\alpha_1^x \ \ \alpha_1^y \ \ \alpha_1^z), \ \alpha_2 = (\alpha_2^x \ \ \alpha_2^y \ \ \alpha_2^z),..., \ \alpha_n = (\alpha_n^x \ \ \alpha_n^y \ \ \alpha_n^z);$$

$p^k$ represents a vector containing the positions $\{p_1,...,p_k\} \in \Re^3$ of the position markers (12, 14, 16; 22, 24, 25, 26, 27) and can, in particular, be represented in the form $p^k = (p_1^x, p_1^y, p_1^z,..., p_k^x, p_k^y, p_k^z)^T$; and $\mu$ represents a scalar parameter to be adapted to the respective object (10, 20, 22), particularly by empirical determination, for the weighting between the regularization term $(\alpha_x^{n^T}K\alpha_x^n + \alpha_y^{n^T}K\alpha_y^n + \alpha_z^{n^T}K\alpha_z^n)$ and the cost function $\frac{1}{n}\sum_{i=1}^{n}(\|x_i - p_{\alpha_i}\| - r_i)^2$.

**8.** The device according to claim 7,
**characterised in that**
the measuring device comprises at least three position marker marking devices, in particular transmitters or transceivers or reflectors or repeaters, for forming or marking the at least three position markers (12, 14, 16; 22, 24, 25, 26, 27), and at least one object marking device, in particular a receiver or transceiver, wherein the measuring device is configured for individually ascertaining the distances between the position marker marking device and the object marking device while identifying the respectively measured position marker marking device.

**9.** A use of the method according to any one of the claims 1 to 6 and/or device according to any one of the claims 7 or 8 for locating and map preparation based on distance data.

**10.** The use of the method according to any one of the claims 1 to 6 and/or device according to any one of the claims 7 or 8 for orientation in an unknown terrain or building.

**11.** The use according to claim 10,
**characterised in that**
the position markers are attached to or dropped at different locations close to the terrain or building.

**Revendications**

**1.** Procédé de localisation d'un objet (10, 20, 22) se déplaçant dans un environnement inconnu comportant les étapes consistant à :

prévoir $k$ repères de position (12, 14, 16, 22, 24, 25, 26, 27) dans des positions $p_1$, $p_2$..., $p_k$ situées à des distances indéfinies les unes des autres, avec $\{p_1..., p_k\} \in \Re^3$, $k$ étant un nombre positif supérieur ou égal à 3,
mesurer de façon répétitive de la distance entre l'objet (10, 20, 22) et les repères de position (12, 14, 16, 22, 24, 25, 26, 27) pour chacun des repères de position (12, 14, 16, 22, 24, 25, 26, 27) indépendamment les uns des autres à des instants non contrôlés de sorte que, aux instants $\{t_1,..., t_n\} \in \Re$ on obtienne des valeurs de distance $\{r_1,..., r_n\} \in \Re$, et détermination d'une courbe de mouvement $x(t) \in \Re^3$ sur

$$x(t) = \sum_{i=l}^{n} a_i k(t, t_i),$$

n étant le nombre de mesures de distance utilisées chaque fonction $k(t, t_j)$ étant une fonction de base définie positive et $\{a_1..., a_n\} \in \Re^3$ étant des vecteurs de coefficients qui sont évalués par des conditions de lissage au moyen d'un terme de régularisation formé avec les fonctions de base, l'évaluation des postions $\{p_1..., p_k\} \in \Re^3$ des repères de position (12, 14, 16, 22, 24, 25, 26, 27) et des vecteurs de coefficients $\{a_1..., a_n\} \in \Re^3$ étant effectuée par minimalisation d'une fonction de risque régularisée qui peut être représentée en utilisant les coordonnées cartésiennes sous la forme

$$R_{reg}(a^n, p^k) = \frac{1}{n} \sum_{i=l}^{n} \left( \left\| x_i - p_a \right\| - r_i \right)^2 + \mu \left( a_x^{n^T} K a_x^n + a_y^{n^T} K a_y^n + a_z^{n^T} K a_z^n \right)$$

avec $x_i = x(t_i) = \sum_{j=l}^{n} a_j k(t_i, t_j)$

k représentant la matrice de Gram $K = \begin{bmatrix} k(t_l, t_l) & ... & k(t_l, t_n) \\ \vdots & \ddots & \vdots \\ k(t_n, t_l) & \cdots & k(t_n, t_n) \end{bmatrix}$ ;

$a_x^n$, $a_y^n$ et $a_z^n$ représentant les coordonnées en x-, y- et z- des vecteurs de coefficients avec

$$a_x^n = (a_l^x, ..., a_n^x)^T \ , \quad a_y^n = (a_l^y, ..., a_n^y)^T \ , \quad a_z^n = (a_l^z, ..., a_n^z)^T \ ,$$

et $\alpha^n = (\alpha_l, ..., \alpha_n)$ avec

$$a_l = (a_l^x \ a_l^y \ a_l^z) \ , \quad a_2 = (a_2^x \ a_2^y \ a_2^z) \ , \quad a_n = (a_n^x \ a_n^y \ a_n^z) \ ,$$

$p^k$ représentant un vecteur qui renferme les positions $\{p_1..., p_k\} \in \Re^3$ des repères de position (12, 14, 16, 22, 24, 25, 26, 27), et étant en particulier susceptible d'être représenté sous une forme

$$P^k = (P_l^x, P_l^y, P_l^z, ..., P_k^x, P_k^y, P_k^z)^T \quad \text{et}$$

$\mu$ représentant un paramètre scalaire pouvant être adapté à l'objet (10, 20, 22) respectif en particulier par détermination empirique pour obtenir une pondération entre le terme de régularisation

$$(a_x^{n^T} K a_x^n + a_y^{n^T} K a_y^n + a_z^{n^T} K a_z^n) \quad \text{et la fonction de coût :}$$

$$\frac{l}{n} \sum_{j=l}^{n} \left( \left\| x_i - p_a \right\| - r_i \right)^2 .$$

**2.** Procédé conforme à la revendication 1,
**caractérisé par**
l'utilisation de fonctions gaussiennes en tant que fonctions de base définies positives en particulier sous la forme

$$k(t, t') = exp \left( - \frac{\left\| t - t' \right\|^2}{2\sigma^2} \right) .$$

**3.** Procédé conforme à la revendication 2,
**caractérisé en ce que**
l'écart standard $\sigma$ correspondant à la dynamique de l'objet (10, 20, 22) est choisi de sorte que, dans le cas d'un objet (22) ayant un mouvement se modifiant rapidement en vitesse et/ou en direction on ait un écart standard plus faible que dans le cas d'un objet (20) ayant un mouvement se modifiant plus lentement en vitesse et/ou en direction.

**4.** Procédé conforme à la revendication 1,
**caractérisé en ce qu'**
il comporte les étapes consistant à :

déterminer une fonction de réponse d'impulsions indiquant une réponse d'impulsions du système dynamique formé par le mouvement de l'objet (10, 20, 22), et
utiliser cette fonction de réponse d'impulsions comme fonction de base k(t, t') pour déterminer la courbe de mouvement.

**5.** Procédé conforme à la l'une des revendications précédentes,
**caractérisé par**
la formation du terme de régularisation à partir d'un produit vectoriel des vecteurs de coefficients par la matrice de Gram des fonctions de base.

**6.** Procédé conforme à la l'une des revendications précédentes,
**caractérisé en ce que**
l'étape de prévision de repères de position (12, 14, 16, 22, 24, 25, 26, 27) comporte l'utilisation d'émetteurs ou d'émetteurs-récepteurs localement fixes en tant que repères de position, et
l'étape de mesure comporte la détermination de la distance de chacun des émetteurs ou émetteurs-récepteurs à un récepteur ou à un émetteur-récepteur se déplaçant avec l'objet (10).

**7.** Dispositif permettant la mise en oeuvre du procédé conforme à l'une des revendications précédentes et/ou permettant de localiser un objet (10, 20, 22) se déplaçant dans un environnement inconnu comportant :

un dispositif de mesure qui est réalisé pour permettre d'effectuer des mesures répétitives de la distance entre l'objet (10, 20, 22) et au moins trois repères de position (12, 14, 16, 22, 24, 25, 26, 27), pour chacun de ces repères de position indépendamment les uns des autres à une série d'instants, et est susceptible de délivrer des valeurs de distance $\{r_1\ldots, r_n\} \in \Re$ déterminées aux instants $\{t_1\ldots, t_n\} \in \Re$, et

un dispositif d'exploitation pour déterminer une courbe de mouvement $x(t) \in \Re^3$ sur

$$x(t) = \sum_{i=1}^{n} a_i\, k(t,\, t_i)$$

n étant le nombre de mesures de distance utilisé et chacune des fonctions $k(t,\, t_i)$ représentant une fonction de base définie positive, et $\{a_1\ldots, a_n\} \in \Re^3$ étant des vecteurs de coefficients, et, le dispositif d'exploitation étant susceptible d'évaluer les vecteurs de position par des conditions de lissage au moyen d'un terme de régularisation formé avec les fonctions de base,

l'évaluation des positions $\{p_1\ldots, p_k\} \in \Re^3$ des repères de position (12, 14, 16, 22, 24, 25, 26, 27) et des vecteurs de coefficients $\{a_1\ldots, a_n\} \in \Re^3$ étant effectuée par minimalisation d'une fonction de risque régularisée qui peut être représentée en utilisant les coordonnées cartésiennes sous la forme

$$R_{reg}(a^n, p^k) = \frac{1}{n} \sum_{j=1}^{n} \left( \left\| x_i - p_a \right\| - r_i \right)^2 + \mu \left( a_x^{n^{\mathrm{T}}} K\, a_x^n + a_y^{n^{\mathrm{T}}} K a_y^n + a_z^{n^{\mathrm{T}}} K a_z^n \right)$$

avec $\quad x_i = x(t_i) = \sum_{j=1}^{n} a_i\, k(t_i,\, t_j)$

k représentant la matrice de Gram $K = \begin{bmatrix} k(t_i, t_l) & \ldots & k(t_i, t_n) \\ \vdots & \ddots & \vdots \\ k(t_n, t_l) & \cdots & k(t_n, t_n) \end{bmatrix}$ ;

$a_x"$, $a_y"$ et $a_z"$ représentant les coordonnées en x-, y- et z- des vecteurs de coefficients avec

$$a_x^n = (a_l^x, \ldots, a_n^x)^T \;,\quad a_y^n = (a_l^y, \ldots, a_n^y)^T \;,\quad a_z^n = (a_l^z, \ldots, a_n^z)^T \;,$$

et $a^n = (a_1, \ldots, a_n)$ avec

$$a_l = (a_l^x\; a_l^y\; a_l^z) \;,\quad a_2 = (a_2^x\; a_2^y\; a_l^z) \;,\quad a_n = (a_n^x\; a_n^y\; a_n^z) \;,$$

$p^k$ représentant un vecteur qui renferme les positions $\{p_1\ldots, p_k\} \in \Re^3$ des repères de position (12, 14, 16, 22, 24, 25, 26, 27), et étant en particulier susceptible d'être représenté sous une forme

$$P^k = (P_l^x, P_l^y, P_l^z, \ldots, P_k^x, P_k^y, P_k^z)^T \quad \text{et}$$

$\mu$ représentant un paramètre scalaire pouvant être adapté à l'objet (10, 20, 22) respectif en particulier par détermination empirique pour obtenir une pondération entre le terme de régularisation $(a_x^{n^T} K a_x^n + a_y^{n^T} K a_y^n + a_z^{n^T} K a_z^n)$ et la fonction de coût :

$$\frac{1}{n} \sum_{i=l}^{n} \left( \left\| x_i - p_a \right\| - r_i \right)^2 .$$

8. Dispositif conforme à la revendication 7,
   **caractérisé en ce que**
   le dispositif de mesure comporte au moins trois dispositifs de marquage de repères de position, en particulier des émetteurs ou émetteurs-récepteurs ou réflecteurs ou répétiteurs pour former ou marquer les repères de position (12, 14, 16, 22, 24, 25, 26, 27) au moins au nombre de trois et au moins un dispositif de marquage d'objet, en particulier un émetteur ou émetteur-récepteur, l'installation de mesure étant susceptible de déterminer individuellement les distances entre les dispositifs de marquage de repères de position et le dispositif de marquage d'objet par identification du dispositif de marquage de repères de position respectivement mesuré.

9. Utilisation du procédé conforme à l'une des revendications 1 à 6 et/ou du dispositif conforme à l'une des revendications 7 et 8 pour permettre la localisation et la formation d'une carte à partir de données de distances.

10. Utilisation du procédé conforme à l'une des revendications 1 à 6 et/ou du dispositif conforme à l'une des revendications 7 et 8 pour permettre de s'orienter dans un terrain ou un bâtiment inconnu.

11. Utilisation du procédé conforme à la revendication 10,
    **caractérisée en ce que**
    les repères de position sont fixés ou déposés en différents lieux à proximité du terrain ou du bâtiment.

$p_3$ 16

$x(t)$ 10

$r_3$

11

$r_1$

$r_2$

$p_2$

14

**Fig. 1**

$p_1$

12

$\{r_1,...,r_n\} \in \Re$

$\{t_1,...,t_n\} \in \Re$

Verfahren

$x(t)$

$p^k = \{p_1,...,p_k\}$

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Fig. 16**

**Fig. 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Grand Challenges. US-amerikanischen Defense Advanced Research Projects Agency, 2004
- **B. SCHÖLKOPF ; A. SMOLA.** Learning with Kernels. MIT Press, 2002
- **C. TAYLOR ; A. RAHIMI ; J. BACHRACH ; H. SHROBE.** A. Grue Simultaneous Localization, Calibration, and Tracking in an ad Hoc Sensor Network. Computer Science
- **E. OLSON ; J. LEONARD ; S. TELLER.** Robust Range-Only Beacon Localization. *Proceedings of Autonomous Underwater Vehicles,* 2004
- **P. NEWMAN ; J. LEONARD.** Pure Range-Only Sub-Sea SLAM. Massachusetts Institute of Technology

- **G. HOLLINGER ; J. DJUGASH ; S. SINGH.** Tracking a moving target in cluttered environments with ranging radios. *IEEE International Conference on Robotics and Automation,* 2008
- **J.-L. BLANCO ; J. GONZALEZ ; J.-A.FERNANDEZ-MADRIGAL.** A pure probabalistic approach to range-only SLAM. *IEEE International Conference on Robotics and Automation,* 2008
- **X. NGUYEN ; M. I. JORDAN ; B. SINOPOLI.** *A Kernel-based learning approach to ad hoc sensor network localisation*
- **DAN LI et al.** Detection, classification, and tracking of targets. *IEEE Signal Processing Magazine,* Marz 2002